# EUROPEAN PATENT APPLICATION

(11) **EP 4 796 606 A1**
(43) Date of publication of application: **26.08.2026**
(21) Application number: 24879852.2
(22) Date of filing: 18.10.2024
(51) Int. Cl.: C09D 143/04, C03C 17/30, C08F 220/56, C08F 230/08, C08F 293/00, C09D 133/24, C09D 153/00, C09K 3/00

(54) **SURFACE TREATMENT AGENT, ARTICLE, AND COPOLYMER**

(30) Priority: 20.10.2023 JP 2023181367
(71) Applicant: AGC Inc., Chiyoda-ku Tokyo 100-8405 (JP)
(72) Inventor: TANIGUCHI, Taihei, Tokyo 100-8405 (JP); SUZUKI, Toyokazu, Tokyo 100-8405 (JP)
(74) Representative: Müller-Boré & Partner Patentanwälte PartG mbB
(86) International application number: PCT/JP2024/037285
(87) International publication number: WO 2025/084432

(57) **Abstract**

A surface treatment agent including a copolymer having a unit (A) based on a polymerizable vinyl monomer having a reactive silyl group and a unit (B) based on a (meth)acrylamide compound having a biocompatible functional group, wherein a ratio of the unit (A) with respect to all units constituting the copolymer is from 0.05 to 25 mol%, and a ratio of the unit (B) with respect to all units constituting the copolymer is from 30 to 99.95 mol%.

## Description

### TECHNICAL FIELD

The present invention relates to a surface treatment agent, an article, and a copolymer.

Priority is claimed on Japanese Patent Application No. 2023-181367, filed October 20, 2023, the content of which is incorporated herein by reference.

### BACKGROUND ART

In order to inhibit the adsorption of biological components such as blood, cells, and proteins onto medical devices and the adsorption of algae onto water tanks, it has been proposed to coat the surfaces of these articles with compounds having biocompatible groups.

Patent Document 1 describes a substrate provided with a surface layer formed from a cured product of a compound having a biocompatible group and a reactive silyl group, on at least a portion of the surface of the substrate main body. Examples of the compound having a biocompatible group and a reactive silyl group include a copolymer having a unit based on a (meth)acrylate having a polyoxyethylene structure and a unit based on a (meth)acrylate having an alkoxysilyl group.

### Citation List

### Patent Document

Patent Document 1: International Patent Publication No. 2019/151265

### SUMMARY OF INVENTION

### Technical Problem

However, the effects of the surface layer described in Patent Document 1 to inhibit the adsorption of biological components and algae (non-adsorptivity) may be insufficient depending on the conditions of use of the medical device and the conditions of rearing in a water tank. Therefore, further improvement in non-adsorptivity is required.

The present invention provides a surface treatment agent and copolymer capable of forming a surface layer exhibiting excellent non-adsorptivity for biological components and algae, as well as an article exhibiting excellent non-adsorptivity for biological components and algae.

### Solution to Problem

The present invention provides a surface treatment agent, article, and copolymer having the following configurations [1] to [14].
[1] A surface treatment agent including a copolymer having a unit (A) based on a polymerizable vinyl monomer having a reactive silyl group, and a unit (B) based on a (meth)acrylamide compound having a biocompatible functional group,
   wherein a ratio of the aforementioned unit (A) with respect to all units constituting the aforementioned copolymer is from 0.05 to 25 mol%, and
   a ratio of the aforementioned unit (B) with respect to all units constituting the aforementioned copolymer is from 30 to 99.95 mol%.
[2] The surface treatment agent according to [1], wherein a ratio of the aforementioned unit (B) with respect to all units constituting the aforementioned copolymer is from 44 to 99 mol%.
[3] The surface treatment agent according to [1] or [2], wherein a ratio of the aforementioned unit (A) with respect to all units constituting the aforementioned copolymer is from 1 to 10 mol%.
[4] The surface treatment agent according to any one of [1] to [3], wherein the aforementioned unit (B) is represented by the following formula (B-1): 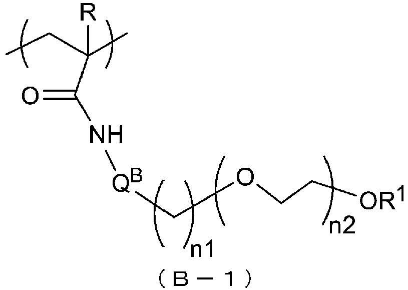 provided that R is a hydrogen atom or a methyl group, Q^{B} is a single bond or a divalent organic group, n1 is an integer from 1 to 4, n2 is an integer from 0 to 300, and R¹ is a hydrogen atom or an alkyl group.
[5] The surface treatment agent according to any one of [1] to [4], wherein the aforementioned unit (B) is represented by the following formula (B-1-1): 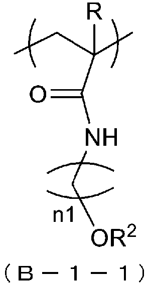 provided that R is a hydrogen atom or a methyl group, n1 is an integer from 1 to 4, and R² is a hydrogen atom, a methyl group, or an ethyl group.
[6] The surface treatment agent according to any one of [1] to [5], wherein the aforementioned unit (A) is represented by the following formula (A-1): 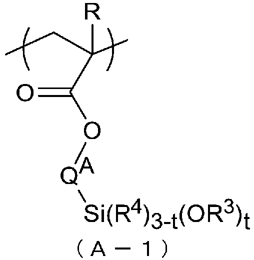 provided that R is a hydrogen atom or a methyl group, Q^{A} is a divalent organic group, R³ is a hydrogen atom or an alkyl group, R⁴ is an alkyl group, t is an integer from 1 to 3, and when a plurality of R³ groups or R⁴ groups are present, the plurality of R³ groups or R⁴ groups may be the same or different.
[7] The surface treatment agent according to any one of [1] to [6], wherein the copolymer further includes a unit (C) having a polyoxyethylene chain constituting a main chain thereof.
[8] The surface treatment agent according to [7], wherein the aforementioned unit (C) is represented by the following formula (C-1) or (C-2): 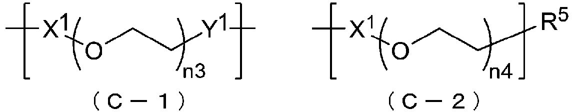
   provided that each of n3 and n4 independently represents an integer from 10 to 200, each of X¹ and Y¹ independently represents a divalent group represented by the following formula (1) or (2), and R⁵ is a hydroxyl group, a methoxy group, or an ethoxy group, 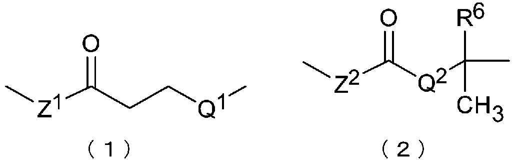
   provided that Q¹ is a divalent organic group, Q² is a single bond or an alkylene group having 1 to 5 carbon atoms, and R⁶ is a cyano group or a methyl group,
   when X¹ is a divalent group represented by the aforementioned formula (1), Z¹ in the formula (1) is a single bond, and an end on the Z¹ side of the divalent group represented by the aforementioned formula (1) is bonded to an end on the oxygen atom side of (OCH₂CH₂)ₙ₃ or (OCH₂CH₂)ₙ₄ adjacent to X¹,
   when X¹ is a divalent group represented by the aforementioned formula (2), Z² in the formula (2) is a single bond, and an end on the Z² side of the divalent group represented by the aforementioned formula (2) is bonded to an end on the oxygen atom side of (OCH₂CH₂)ₙ₃ or (OCH₂CH₂)ₙ₄ adjacent to X¹,
   when Y¹ is a divalent group represented by the aforementioned formula (1), Z¹ in the formula (1) is an oxygen atom, and an end on the Z¹ side of the divalent group represented by the aforementioned formula (1) is bonded to an end on the carbon atom side of (OCH₂CH₂)ₙ₃ adjacent to Y¹,
   when Y¹ is a divalent group represented by the aforementioned formula (2), Z² in the formula (2) is an oxygen atom, and an end on the Z² side of the divalent group represented by the aforementioned formula (2) is bonded to an end on the carbon atom side of (OCH₂CH₂)ₙ₃ adjacent to Y¹.
[9] An article having a substrate and a surface layer provided on the aforementioned substrate,
   wherein the aforementioned surface layer is a layer formed from the surface treatment agent according to any one of [1] to [8].
[10] The article according to [9], which is a medical device.
[11] The article according to [9], which is a water tank.
[12] A copolymer having a unit represented by the following formula (A-1), a unit represented by the following formula (B-1), and a unit (C) having a polyoxyethylene chain constituting a main chain of the copolymer,
   wherein a ratio of the unit represented by the aforementioned formula (A-1) with respect to all units constituting the aforementioned copolymer is from 0.05 to 25 mol%, and
   a ratio of the unit represented by the aforementioned formula (B-1) with respect to all units constituting the aforementioned copolymer is from 30 to 98 mol%, 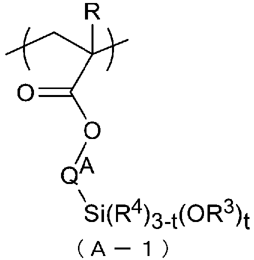
   provided that R is a hydrogen atom or a methyl group, Q^{A} is a divalent organic group, R³ is a hydrogen atom or an alkyl group, R⁴ is an alkyl group, t is an integer from 1 to 3, and when a plurality of R³ groups or R⁴ groups are present, the plurality of R³ groups or R⁴ groups may be the same or different, 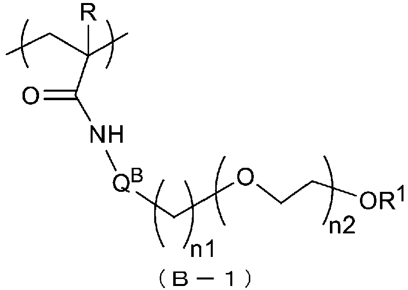
   provided that R is a hydrogen atom or a methyl group, Q^{B} is a single bond or a divalent organic group, n1 is an integer from 1 to 4, n2 is an integer from 0 to 300, and R¹ is a hydrogen atom or an alkyl group.
[13] The copolymer according to [12], wherein the aforementioned unit (B) is represented by the following formula (B-1-1): 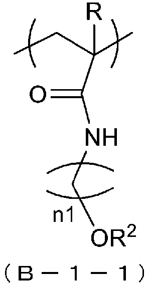 provided that R is a hydrogen atom or a methyl group, n1 is an integer from 1 to 4, and R² is a hydrogen atom, a methyl group, or an ethyl group.
[14] The copolymer according to [12] or [13], wherein the aforementioned unit (C) is represented by the following formula (C-1) or (C-2): 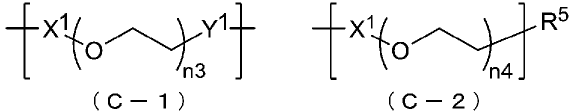
   provided that each of n3 and n4 independently represents an integer from 10 to 200, each of X¹ and Y¹ independently represents a divalent group represented by the following formula (1) or (2), and R⁵ is a hydroxyl group, a methoxy group, or an ethoxy group, 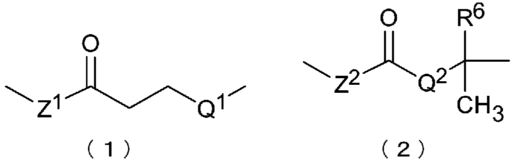
   provided that Q¹ is a divalent organic group, Q² is a single bond or an alkylene group having 1 to 5 carbon atoms, and R⁶ is a cyano group or a methyl group,
   when X¹ is a divalent group represented by the aforementioned formula (1), Z¹ in the formula (1) is a single bond, and an end on the Z¹ side of the divalent group represented by the aforementioned formula (1) is bonded to an end on the oxygen atom side of (OCH₂CH₂)ₙ₃ or (OCH₂CH₂)ₙ₄ adjacent to X¹,
   when X¹ is a divalent group represented by the aforementioned formula (2), Z² in the formula (2) is a single bond, and an end on the Z² side of the divalent group represented by the aforementioned formula (2) is bonded to an end on the oxygen atom side of (OCH₂CH₂)ₙ₃ or (OCH₂CH₂)ₙ₄ adjacent to X¹,
   when Y¹ is a divalent group represented by the aforementioned formula (1), Z¹ in the formula (1) is an oxygen atom, and an end on the Z¹ side of the divalent group represented by the aforementioned formula (1) is bonded to an end on the carbon atom side of (OCH₂CH₂)ₙ₃ adjacent to Y¹,
   when Y¹ is a divalent group represented by the aforementioned formula (2), Z² in the formula (2) is an oxygen atom, and an end on the Z² side of the divalent group represented by the aforementioned formula (2) is bonded to an end on the carbon atom side of (OCH₂CH₂)ₙ₃ adjacent to Y¹.

### Advantageous Effects of Invention

The surface treatment agent of the present invention can form a surface layer that exhibits excellent non-adsorptivity for biological components and algae.

The article of the present invention exhibits excellent non-adsorptivity for biological components and algae.

The copolymer of the present invention can form a surface layer that exhibits excellent non-adsorptivity for biological components and algae.

### DESCRIPTION OF EMBODIMENTS

The meanings and definitions of terms in the present invention are as follows.

A polymerizable vinyl monomer is a compound that has a polymerizable vinyl group. The polymerizable vinyl group is represented by CH₂=CR-. R is a hydrogen atom or a methyl group.

The term "(meth)acrylamide compound" is a generic term for an acrylamide compound and a methacrylamide compound.

The term "(meth)acrylate" is a generic term for an acrylate and a methacrylate.

A unit based on a monomer means a portion derived from that monomer and formed by polymerization of the monomer.

In the present specification, a compound, group, structure or unit represented by a chemical formula will also be expressed as a compound, group, structure or unit with the number of the formula appended thereto. For example, a compound represented by formula (1) will also be expressed as compound (1), a group represented by formula (1) will also be expressed as group (1), and a structure represented by formula (1) will also be expressed as structure (1).

A symbol "-" indicating a numerical range means that numerical values described before and after this symbol are included as the lower limit value and the upper limit value.

### [Surface treatment agent]

The surface treatment agent of the present invention includes the following copolymer I.

Copolymer I: a copolymer having a unit (A) based on a polymerizable vinyl monomer having a reactive silyl group and a unit (B) based on a (meth)acrylamide compound having a biocompatible functional group, wherein a ratio of the aforementioned unit (A) with respect to all units constituting the aforementioned copolymer is from 0.05 to 25 mol%, and a ratio of the aforementioned unit (B) with respect to all units constituting the aforementioned copolymer is from 30 to 99.95 mol%.

The copolymer I may further include a unit (C) described later, if necessary.

The copolymer I may further include a unit (D) described later, if necessary.

### (Unit (A))

The unit (A) is a unit based on a polymerizable vinyl monomer having a reactive silyl group.

The term "reactive silyl group" is a generic term for hydrolyzable silyl groups such as alkoxysilyl groups and silanol groups. A hydrolyzable silyl group undergoes a hydrolysis reaction to form a silanol group (Si-OH). The silanol groups generated by hydrolysis of the hydrolyzable silyl group in those cases where the reactive silyl group is a hydrolyzable silyl group, or the reactive silyl groups themselves in those cases where the reactive silyl group is a silanol group, undergo a dehydration condensation reaction with each other to form a siloxane bond (Si-O-Si), resulting in a cured product.

The reactive silyl group is preferably an alkoxysilyl group, and examples thereof include the group (3).

-Si(R⁴)₃₋ₜ(OR³)ₜ Formula (3)

provided that R³ is a hydrogen atom or an alkyl group, R⁴ is an alkyl group, and t is an integer from 1 to 3.

When a plurality of R³ groups or R⁴ groups are present, R³ groups or R⁴ groups may be the same or different. From the viewpoint of production, it is preferable that the plurality of R³ or R⁴ groups are the same.

From the viewpoint of excellent adhesion between the substrate and the surface layer, t is preferably 2 or greater, and more preferably 3.

From the viewpoints of hydrolysis reaction rate and excellent volatility of by-products during the hydrolysis reaction, R³ is preferably an alkyl group having 1 to 18 carbon atoms, more preferably an alkyl group having 1 to 6 carbon atoms, and particularly preferably a methyl group or an ethyl group.

From the viewpoint of minimal steric hindrance during the dehydration condensation reaction, R⁴ is preferably an alkyl group having 1 to 18 carbon atoms, more preferably an alkyl group having 1 to 6 carbon atoms, and particularly preferably a methyl group or an ethyl group.

Examples of the unit (A) include a unit (A-1).

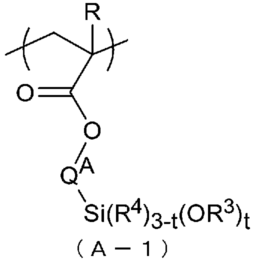

provided that R is a hydrogen atom or a methyl group, Q^{A} is a divalent organic group, R³ is a hydrogen atom or an alkyl group, R⁴ is an alkyl group, t is an integer from 1 to 3, and when a plurality of R³ groups or R⁴ groups are present, the plurality of R³ groups or R⁴ groups may be the same or different.

Q^{A} is preferably a divalent hydrocarbon group having 2 to 10 carbon atoms. The divalent hydrocarbon group may have an ethereal oxygen atom between carbon atoms, and hydrogen atoms may be substituted with halogen atoms or hydroxyl groups. Examples of the halogen atom include a chlorine atom and a fluorine atom. Q^{A} is preferably -C₂H₄-, -C₃H₆-, or -C₄H₈-, more preferably -C₃H₆- or -C₄H₈-, and particularly preferably -C₃H₆-.

R³, R⁴, and t are the same as R³, R⁴, and t in the aforementioned formula (3).

The unit (A) may be a unit based on a (meth)acrylate having a reactive silyl group, and more specifically, may be a unit based on a (meth)acrylate (a-1).

CH₂=CR-C(=O)-O-Q^{A}-Si(R⁴)₃₋ₜ(OR³)ₜ Formula (a-1)

R, Q^{A}, R³, R⁴, and t are the same as R, Q^{A}, R³, R⁴, and t in the aforementioned formula (A-1).

Examples of the (meth)acrylate (a-1) include CH₂=CR-C(=O)-O-(CH₂)₃-Si(OCH₃)₃ and CH₂=CR-C(=O)-O-(CH₂)₃-Si(OC₂H₅)₃.

### (Unit (B))

The unit (B) is a unit based on a (meth)acrylamide compound having a biocompatible functional group.

The biocompatible group is a group having a property that inhibits adhesion and immobilization of biological components, such as blood, cells, and proteins, and algae on the surface of a material.

Examples of the biocompatible functional group include a group (4), a group (5), and a group (6).

-(CH₂)ₙ₁-(OCH₂CH₂)ₙ₂-OR¹ Formula (4)

-O-P(=O)(-O-)-O-(CH₂)ₙ₇-N⁺R⁷R⁸R⁹ Formula (5)

-N⁺R¹⁰R¹¹-(CH₂)ₙ₈-X⁻ Formula (6)

In these formulae, n1 is an integer from 1 to 4, n2 is an integer from 0 to 300, and R¹ is a hydrogen atom or an alkyl group,
each of R⁷, R⁸, and R⁹ independently represents an alkyl group having 1 to 5 carbon atoms, and n7 is an integer from 1 to 5,
each of R¹⁰ and R¹¹ independently represents an alkyl group having 1 to 5 carbon atoms, n8 is an integer from 1 to 5, and X⁻ is C(=O)-O- or S(=O)₂-O-.

As the biocompatible functional group, the group (4) is preferred from the viewpoint of ease of availability.
n1 is preferably 1 or 2 from the viewpoint of further improving non-adsorptivity for biological components and algae.
n2 is preferably 5 or less, more preferably 3 or less, and particularly preferably 0, from the viewpoint of further improving ease of availability.

The alkyl group represented by R¹ may be linear or branched, but is preferably linear. The number of carbon atoms in the alkyl group is preferably from 1 to 22, more preferably from 1 to 5, and particularly preferably 1 or 2, from the viewpoint of further improving non-adsorptivity for biological components and algae.

The group (4) is preferably one in which n2 is 0 and R¹ is a hydrogen atom, a methyl group, or an ethyl group.

Examples of the (meth)acrylamide compound having a biocompatible functional group include a (meth)acrylamide compound (b-1):

CH₂=CR-C(=O)-NH-Q^{B}-X Formula (b-1)

provided that R is a hydrogen atom or a methyl group, Q^{B} is a single bond or a divalent organic group, and X is a biocompatible functional group.

The unit (B) is preferably a unit (B-1), which is a unit based on a (meth)acrylamide compound where X in the aforementioned formula (b-1) is the aforementioned group (4).

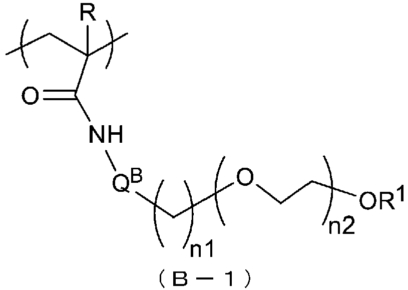

In this formula, R is a hydrogen atom or a methyl group, Q^{B} is a single bond or a divalent organic group, n1 is an integer from 1 to 4, n2 is an integer from 0 to 300, and R¹ is a hydrogen atom or an alkyl group.

The divalent organic group represented by Q^{B} is preferably a divalent hydrocarbon group, and more preferably an alkylene group. The number of carbon atoms in the divalent hydrocarbon group is preferably from 1 to 10, more preferably from 1 to 5, and particularly preferably from 1 to 3. Examples of Q^{B} include a methylene group, an ethylene group, a propylene group, and an isopropylene group.

Q^{B} is preferably a single bond.

n1, n2, and R¹ are the same as n1, n2, and R¹ in the aforementioned formula (4).

The unit (B-1) may be a unit based on a (meth)acrylamide compound (b-1):

CH₂=CR-C(=O)-NH-Q^{B}-(CH₂)ₙ₁-(OCH₂CH₂)ₙ₂-OR¹ Formula (b-1)

R, Q^{B}, R¹, n1, and n2 are the same as R, Q^{B}, R¹, n1, and n2 in the aforementioned formula (B-1).

As the unit (B), a unit (B-1-1) is particularly preferred.

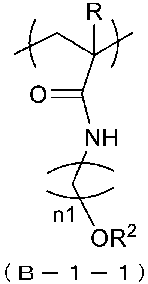

In this formula, R is a hydrogen atom or a methyl group, n1 is an integer from 1 to 4, and R² is a hydrogen atom, a methyl group, or an ethyl group.

### (Unit (C))

The unit (C) is a unit having a polyoxyethylene chain that constitutes the main chain of the copolymer I.

Examples of the unit (C) include a unit (C-1) or (C-2).

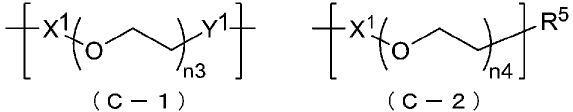

In these formulae, each of n3 and n4 independently represents an integer from 10 to 200, each of X¹ and Y¹ independently represents the following divalent group (1) or (2), and R⁵ is a hydroxyl group, a methoxy group, or an ethoxy group.

Each of n3 and n4 independently preferably represents an integer from 40 to 200, and more preferably an integer from 40 to 140.

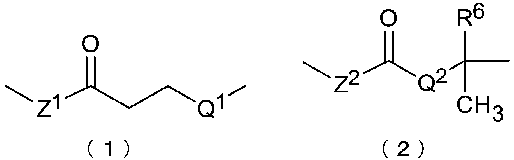

In these formulae, Q¹ is a divalent organic group, Q² is a single bond or an alkylene group having 1 to 5 carbon atoms, and R⁶ is a cyano group or a methyl group,
when X¹ is a divalent group represented by the aforementioned formula (1), Z¹ in the formula (1) is a single bond, and an end on the Z¹ side of the divalent group represented by the aforementioned formula (1) is bonded to an end on the oxygen atom side of (OCH₂CH₂)ₙ₃ or (OCH₂CH₂)ₙ₄ adjacent to X¹,
when X¹ is a divalent group represented by the aforementioned formula (2), Z² in the formula (2) is a single bond, and an end on the Z² side of the divalent group represented by the aforementioned formula (2) is bonded to an end on the oxygen atom side of (OCH₂CH₂)ₙ₃ or (OCH₂CH₂)ₙ₄ adjacent to X¹,
when Y¹ is a divalent group represented by the aforementioned formula (1), Z¹ in the formula (1) is an oxygen atom, and an end on the Z¹ side of the divalent group represented by the aforementioned formula (1) is bonded to an end on the carbon atom side of (OCH₂CH₂)ₙ₃ adjacent to Y¹,
when Y¹ is a divalent group represented by the aforementioned formula (2), Z² in the formula (2) is an oxygen atom, and an end on the Z² side of the divalent group represented by the aforementioned formula (2) is bonded to an end on the carbon atom side of (OCH₂CH₂)ₙ₃ adjacent to Y¹.

Q¹ is preferably a divalent hydrocarbon group having 2 to 10 carbon atoms. The divalent hydrocarbon group may have an ethereal oxygen atom between carbon atoms, and hydrogen atoms may be substituted with halogen atoms, hydroxyl groups, or cyano groups. Examples of the halogen atom include a chlorine atom and a fluorine atom.

Q¹ is preferably -C(CH₃)(COOC₂H₅)-, -C(CH₃)(COOCH₃)-, or -C(CH₃)(CN)-, more preferably -C(CH₃)(COOCH₃)- or -C(CH₃)(CN)-, and particularly preferably - C(CH₃)(CN)-.

The alkylene group represented by Q² may be linear or branched, but is preferably linear.

From the viewpoint of excellent ease of availability, the unit (C) is preferably a unit (C-1-1) in which each of X¹ and Y¹ independently represents the divalent group (1). In this case, the two Q¹ in the unit (C-1-1) may be the same or different.

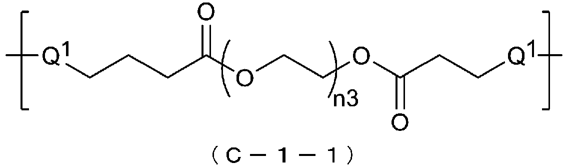

The unit (C) may be, for example, a unit based on a monomer containing a polyoxyethylene chain and having radically polymerizable groups at both ends, or may be a unit based on a polymerization initiator containing a polyoxyethylene chain and a radical-generating moiety such as an azo group (-N=N-). A unit based on the above polymerization initiator is preferred from the viewpoint of easily introducing a polyoxyethylene chain into the main chain of the present copolymer.

Examples of the polymerization initiator containing a polyoxyethylene chain and a radical-generating moiety include an azo-based polymerization initiator containing a polyoxyethylene chain. Specific examples thereof include a compound having a structure (PI). Examples of the compound having the structure (PI) include VPE-0201 manufactured by FUJIFILM Wako Pure Chemical Corporation.

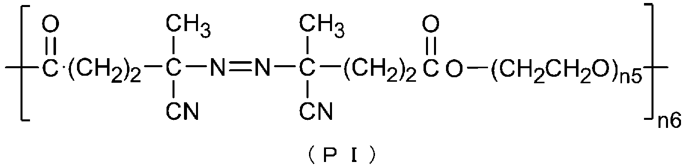

In this formula, n5 is an integer from 10 to 200, and n6 is an integer from 1 to 100.

n5 is preferably an integer from 40 to 200, and more preferably an integer from 40 to 140.

n6 is preferably from 2 to 30, and more preferably from 3 to 20.

It should be noted that the above unit (C-2) has a structure at the end of the main chain of the copolymer I, and may be the same as the above unit (C-1) with the exception that Y¹ in the above unit (C-1) is substituted with R⁵. That is, the unit (C-2) and the unit (C-1) may be structural units derived from the same monomer, and specific examples of the unit (C-2) also include units in which the moiety corresponding to Y¹ in the above unit (C-1-1) is substituted with R⁵.

Further, the copolymer I may contain both the unit (C-1) and the unit (C-2).

### (Unit (D))

The unit (D) is another unit other than the unit (A), the unit (B), and the unit (C).

Examples of the unit (D) include a unit having a biocompatible functional group (excluding the unit (B) and the unit (C)), a unit based on a monomer having no reactive silyl group and biocompatible functional group, and a unit based on a polymerization initiator having no polyoxyethylene chain.

Examples of the unit having a biocompatible functional group (excluding the unit (B) and the unit (C)) include a unit represented by formula (B11), (B2), or (B3) described in International Patent Publication No. 2019/151265.

Examples of the unit based on a monomer having no reactive silyl group and biocompatible functional group include a unit represented by formula (C) described in International Patent Publication No. 2019/151265.

The unit (D) is preferably a unit having a biocompatible functional group (excluding the unit (B) and the unit (C)), and more preferably a unit (D-1) from the viewpoint of further improving ease of availability.

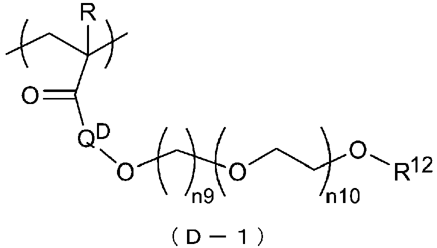

In this formula, R is a hydrogen atom or a methyl group, Q^{D} is a single bond or a divalent organic group, n9 is 2 or 3, n10 is an integer from 0 to 300, and R¹² is a hydrogen atom or an alkyl group.

Examples of the divalent organic group represented by Q^{D} include -O-Q³-, provided that Q³ is a divalent organic group. When Q^{D} is -O-Q³-, an end on the -O- side of -O-Q³- is bonded to the carbonyl group adjacent to Q^{D}.

Q³ is preferably a divalent hydrocarbon group. The divalent hydrocarbon group may have an ethereal oxygen atom between carbon atoms, and hydrogen atoms may be substituted with halogen atoms or hydroxyl groups. Examples of the halogen atom include a chlorine atom and a fluorine atom. The number of carbon atoms in the hydrocarbon group is preferably from 2 to 10, and more preferably from 2 to 6. Q³ is preferably -C₂H₄-, -C₃H₆-, or -C₄H₈-, more preferably -C₃H₆- or -C₄H₈-, and particularly preferably -C₃H₆-.

Q^{D} is preferably a single bond.

n10 is preferably 10 or less, more preferably 5 or less, and particularly preferably 0 or 1, from the viewpoint of further improving water resistance.

The alkyl group represented by R¹² may be linear or branched, but is preferably linear. The number of carbon atoms in the alkyl group is preferably from 1 to 22, more preferably from 1 to 5, and particularly preferably 1 or 2, from the viewpoint of further improving non-adsorptivity for biological components and algae.

The unit (D-1) may be a unit based on a compound (d-1).

CH₂=CR-C(=O)-Q^{D}-O-(CH₂)ₙ₉-(OCH₂CH₂)ₙ₁₀-OR¹² Formula (d-1)

R, Q^{D}, R¹², n9, and n10 are the same as R, Q^{D}, R¹², n9, and n10 in the aforementioned formula (D-1).

As the compound (d-1), for example, hydroxyethyl methacrylate is preferred.

### (Copolymer I)

The ratio of the unit (A) with respect to all units constituting the copolymer I is from 0.05 to 25 mol%. When the ratio of the unit (A) is equal to or more than the above lower limit value, the non-adsorptivity for biological components and algae, the durability thereof, water resistance and wear resistance are excellent, whereas when the ratio is equal to or less than the above upper limit value, the non-adsorptivity for biological components and algae is excellent.

The above ratio of the unit (A) is preferably 0.1 mol% or more, more preferably 0.5 mol% or more, and particularly preferably 1 mol% or more. The above ratio of the unit (A) is preferably 20 mol% or less, more preferably 10 mol% or less, and particularly preferably 7 mol% or less. The above lower limit values and the above upper limit values can be appropriately combined. For example, the above ratio of the unit (A) is preferably from 0.1 mol% to 20 mol%, more preferably from 0.5 mol% to 20 mol%, still more preferably from 0.5 mol% to 10 mol% or from 0.5 mol% to 7 mol%, and particularly preferably from 1 mol% to 10 mol% or from 1 mol% to 7 mol%.

The ratio of the unit (B) with respect to all units constituting the copolymer I is from 30 to 99.95 mol%. When the ratio of the unit (B) is equal to or more than the above lower limit value, the non-adsorptivity for biological components and algae, and acid resistance are excellent, whereas when the ratio is equal to or less than the above upper limit value, the non-adsorptivity for biological components and algae, the durability thereof, water resistance and wear resistance are excellent.

The above ratio of the unit (B) is preferably 49 mol% or more, particularly preferably 70 mol% or more when the copolymer I does not have the unit (C), and particularly preferably 60 mol% or more when the copolymer I has the unit (C).

The above ratio of the unit (B) is preferably 99 mol% or less, and particularly preferably 97 mol% or less when the copolymer I does not have the unit (C), and particularly preferably 98 mol% or less when the copolymer I has the unit (C).

The above lower limit values and the above upper limit values can be appropriately combined. For example, the above ratio of the unit (B) is preferably from 49 mol% to 99 mol%, particularly preferably from 70 mol% to 97 mol% when the copolymer I does not have the unit (C), and particularly preferably from 60 mol% to 98 mol% when the copolymer I has the unit (C).

When the copolymer I has the unit (C), the lower limit value of the ratio of the unit (B) with respect to the sum of the unit (B) and the unit (C) is preferably 90 mol%, and more preferably 94 mol% or 95 mol%, from the viewpoint of further improving polymerizability.

The upper limit value of the ratio of the unit (B) with respect to the sum of the unit (B) and the unit (C) is preferably 99 mol%, and more preferably 98 mol%, from the viewpoint of further improving non-adsorptivity for biological components and algae. The above lower limit values and the above upper limit values can be appropriately combined.

When the copolymer I has the unit (C), the ratio of the sum of the unit (A), the unit (B) and the unit (C) with respect to all units constituting the copolymer I is preferably 50 mol% or more, may be 70 mol% or more, or may be 100 mol%, with respect to all units constituting the copolymer I.

When the copolymer I has the unit (D-1), the ratio of the sum of the unit (D-1) with respect to all units constituting the copolymer I is preferably from 0.1 to 90 mol%, more preferably from 20 to 70 mol%, and particularly preferably from 20 to 50 mol%, with respect to all units constituting the copolymer I.

From the viewpoint of ease of production, the mass average molecular weight (hereinafter also referred to as "Mw") of the copolymer I is preferably from 5,000 to 2,000,000, and more preferably from 10,000 to 500,000.

Mw is calculated by size exclusion chromatography.

The copolymer I can be produced by a known method, such as the method described in International Patent Publication No. 2019/151265. For example, a copolymer having the unit (A) and the unit (B) can be obtained by polymerizing a monomer component containing a (meth)acrylate (a-1) and a (meth)acrylamide compound (b-1) in the presence of a polymerization initiator. At this time, a copolymer having the unit (A), the unit (B) and the unit (C) can be obtained by including a monomer containing a polyoxyethylene chain and having radically polymerizable groups at both ends in the monomer component, or by using a polymerization initiator containing a polyoxyethylene chain and a radical-generating moiety as the polymerization initiator.

### (Other components)

The surface treatment agent of the present invention may contain (an)other component(s) other than the copolymer I.

Examples of the other components include other solid components besides the copolymer I, and a liquid medium.

In those cases where the surface treatment agent is used for forming a surface layer described below, and the surface layer is formed by dry coating, the surface treatment agent may contain only solid components or may also contain a liquid medium. When the surface layer is formed by wet coating, a liquid medium is included.

The other solid components may be components that cure in a similar manner to the copolymer I, or may be non-curable components.

Examples of the other solid components include impurities, catalysts, and functional additives that could not be removed completely among the raw materials used in the production process of the copolymer I and by-products; compounds having a biocompatible moiety but having no reactive silyl group; and compounds having a reactive silyl group but having no biocompatible moiety.

As the catalyst, any conventionally known catalyst used in the hydrolysis condensation reaction of a reactive silyl group may be used without any particular limitations. Specific examples of the catalyst include acids such as hydrochloric acid, nitric acid, acetic acid, sulfuric acid, phosphoric acid, and sulfonic acids such as methanesulfonic acid and p-toluenesulfonic acid; bases such as sodium hydroxide, potassium hydroxide, and ammonia; and aluminum-based and titanium-based metal catalysts.

Examples of the functional additives include ultraviolet absorbers, light stabilizers, antioxidants, leveling agents, surfactants, antimicrobial agents, dispersants, and inorganic fine particles.

Examples of the compounds having a biocompatible moiety but having no reactive silyl group include homopolymers of (meth)acrylamide compounds having a biocompatible functional group or (meth)acrylates having a biocompatible functional group, and copolymers of (meth)acrylamide compounds having a biocompatible functional group or (meth)acrylates having a biocompatible functional group with monomers having no reactive silyl groups.

The liquid medium can be appropriately selected from known liquid media. It is preferable that the liquid medium be capable of uniformly dissolving or dispersing the solid components including the copolymer I.

Because the liquid medium is ultimately removed, the boiling point thereof is preferably from 60 to 160°C, and more preferably from 60 to 120°C.

As the liquid medium, alcohols, ethers, ketones, esters, or the like are preferred. Examples of the liquid medium that satisfies the above boiling point condition include isopropyl alcohol, ethanol, propylene glycol monomethyl ether, 2-butanone, and ethyl acetate. One of these may be used alone, or two or more types thereof may be used in combination.

The liquid medium may contain water for a hydrolysis reaction of reactive silyl group-containing components such as the copolymer I. It should be noted that even when the liquid medium does not contain water, the reactive silyl group-containing components can undergo a hydrolysis reaction through moisture in the atmosphere.

The content of the copolymer I in the surface treatment agent is preferably 30% by mass or more, more preferably 50% by mass or more, even more preferably 70% by mass or more, particularly preferably 90% by mass or more, and may even be 100% by mass, with respect to the total solid content, from the viewpoints of the non-adsorptivity for biological components and algae, the durability thereof, water resistance and wear resistance.

In those cases where the surface treatment agent contains a catalyst, the content of the catalyst is preferably from 0.01 to 20% by mass, more preferably from 0.1 to 5% by mass, and particularly preferably from 0.1 to 2% by mass, with respect to the content of the copolymer I.

In those cases where the surface treatment agent contains a liquid medium, the solid content concentration of the surface treatment agent is preferably from 0.01 to 50% by mass, more preferably from 0.1 to 30% by mass, and particularly preferably from 0.1 to 10% by mass, with respect to the total mass of the surface treatment agent. When the solid content concentration is within the above range, the film thickness of the surface layer formed by wet coating using the surface treatment agent is more likely to be within an appropriate range that fully exhibits the non-adsorptivity for biological components and algae, and the durability thereof.

The solid content concentration of the surface treatment agent can be calculated from the mass of the surface treatment agent after vacuum drying at 80°C for 3 hours and the mass of the surface treatment agent before heating. The solid content concentration of the surface treatment agent may also be calculated from the amount of the total solid content and the liquid medium blended during the production of the surface treatment agent.

In those cases where the surface treatment agent contains a liquid medium, the content of the liquid medium is preferably from 50 to 99.99% by mass, more preferably from 70 to 99.9% by mass, and particularly preferably from 90 to 99.9% by mass, with respect to the total mass of the surface treatment agent.

The method for producing the surface treatment agent is not particularly limited. Mixing of the solid components including the copolymer I, and in those cases where a liquid medium is further included, mixing of the solid components and the liquid medium, may be performed.

The copolymer I in the surface treatment agent may be subjected to partial hydrolysis and co-condensation to form a partially hydrolyzed co-condensate. The copolymer I and a reactive silane compound having no biocompatible moiety may also be subjected to partial hydrolysis and co-condensation to form a partially hydrolyzed co-condensate. When partial hydrolysis and condensation is performed, the degree of condensation is appropriately adjusted so as to achieve a viscosity that does not interfere with the formation of a surface layer on a substrate, as described below.

From the viewpoint of such viscosity, the Mw of the partially hydrolyzed condensate is preferably from 2,000 to 2,000,000, and more preferably from 30,000 to 300,000.

According to the above-mentioned surface treatment agent, since the copolymer I is included, it is possible to form a surface layer that exhibits excellent non-adsorptivity for biological components and algae.

The surface layer formed from a surface treatment agent containing the copolymer I exhibits non-adsorptivity for biological components and algae due to the unit (B) having a biocompatible functional group. (Meth)acrylamide compounds having biocompatible functional groups are more hydrophilic than (meth)acrylates having the same biocompatible functional group, thereby exhibiting superior non-adsorptivity.

Further, the amide bond of (meth)acrylamide compounds is less susceptible to acid hydrolysis than the ester bond of (meth)acrylates. Therefore, the surface layer formed from the above-mentioned surface treatment agent also exhibits excellent acid resistance. Because the living body is often an acidic environment, the inclusion of the unit (B) contributes to improved long-term stability in vivo.

### [Article]

An article according to one embodiment of the present invention includes a substrate and a surface layer provided on the substrate. The surface layer is a layer formed from the surface treatment agent of the present invention.

The surface layer is typically formed from a cured product of the surface treatment agent of the present invention. The expression "the surface layer is formed from a cured product of the surface treatment agent" means that the surface layer contains at least a cured product of a reactive silyl group-containing component that includes the copolymer I. It should be noted that in those cases where the surface treatment agent contains a liquid medium, the cured product will be a cured product obtained by removing the liquid medium from the surface treatment agent.

A constituent material of the substrate is not particularly limited. Specific examples of the constituent material of the substrate include metals, resins, glass, and composite materials composed of two or more of these materials, and are selected appropriately depending on the application. From the viewpoint of excellent adhesion to the surface layer, the constituent material of the substrate is preferably a material in which the surface of a molded body formed from that material has a hydroxyl group, and glass is suitable. In those cases where the surface of the substrate does not have a hydroxyl group, it is preferable to introduce a hydroxyl group using a conventionally known method, for example, a physical treatment method such as corona treatment or a chemical treatment method such as primer treatment. It should be noted that the substrate does not need to be formed entirely from the above material, as long as at least a portion or all of the surface on which the surface layer is to be provided is formed from the above material.

As the primer treatment, a method of using a compound containing an alkoxysilyl group, such as tetraethoxysilane, or a partially hydrolyzed condensate thereof; or a method of using a metal oxide, such as silica, is preferred. The primer treatment method may employ either wet coating or dry coating.

The thickness of the surface layer is preferably from 10 to 100,000 nm, and particularly preferably from 10 to 10,000 nm. When the thickness of the surface layer is equal to or more than the above lower limit value, sufficient non-adsorptivity for biological components and algae, the durability thereof and water resistance are easily exhibited. When the thickness of the surface layer is equal to or less than the above upper limit value, the strength is further improved.

The thickness of the surface layer can be determined by measurement with an X-ray reflectometer typified by ATX-G manufactured by Rigaku Corporation.

An article can be obtained by forming a surface layer on the surface of a substrate using a surface treatment agent.

Examples of the method for forming the surface layer include dry coating methods such as vacuum deposition methods, CVD methods and sputtering methods, or wet coating methods, and wet coating methods are preferred.

Examples of the method for forming the surface layer by wet coating include methods including a step of obtaining a coating film by applying a surface treatment agent containing the liquid medium described above onto a substrate (hereinafter also referred to as a "coating step"), and a step of obtaining the surface layer by curing the coating film (hereinafter also referred to as a "curing step").

Examples of the method for applying the surface treatment agent in the coating step include a dip coating method, a spin coating method, a wipe coating method, a spray coating method, a squeegee coating method, a die coating method, an inkjet method, a flow coating method, a roll coating method, a casting method, the Langmuir-Blodgett method, and a gravure coating method.

Heating is preferred as a method for curing the coating film in the curing step. The heating temperature depends on the type of reactive silyl group-containing components including the copolymer I, but is preferably from 50 to 150°C, and more preferably from 100 to 150°C. It should be noted that in the curing step, removal of the liquid medium is also typically conducted at the same time. Therefore, the heating temperature is preferably a temperature equal to or higher than the boiling point of the liquid medium. However, in those cases where drying by heating is difficult due to the material or the like of the substrate, removal of the liquid medium is conducted without heating. Examples of such methods include drying under reduced pressure.

In the formation of the surface layer by wet coating, processing steps other than the coating step and the drying step may be included, if necessary. For example, in those cases where the surface treatment agent does not contain water, a humidification treatment or the like may be conducted either at the same time as the curing step, or before or after the curing step.

Further, after forming the surface layer, excess compounds in the surface layer may be removed as needed. Examples of specific methods therefor include a method of pouring a solvent, such as a compound used as the liquid medium of the surface treatment agent, onto the surface layer; and a method of wiping off with a cloth soaked in a solvent, such as the compound used as the liquid medium of the surface treatment agent.

It should be noted that the surface treatment agent can also be used as a repair agent when the surface layer deteriorates. In such cases, the coating method is preferably wet coating such as spray coating and brush coating. The curing method preferably involves heating using a dryer or the like.

Although there are no particular limitations on the applications of the article, because the article exhibits excellent non-adsorptivity for biological components and algae, the durability thereof, water resistance and wear resistance, articles with a surface that comes into contact with biological components such as blood, cells, and proteins (hereinafter also referred to as a "biological component contact surface"), or articles with a surface that comes into contact with water (hereinafter also referred to as a "water contact surface") are preferred.

Examples of articles with a biological component contact surface include medical devices such as endoscopes, catheters, medical treatment tools, artificial blood vessels, artificial joints, bags, artificial heart-lung machines, tubes, stents, chips, ampules, vials, syringes, needles, and 3D printing tools for proteins; bioanalytical equipment components such as needles, chips, and vials; and physical and chemical equipment such as petri dishes, plates, vials, and chips. Of these, medical devices are suitable because they often come into contact with biological components.

Examples of articles with a water contact surface include water tanks, pipes, waterways, pools, ship bottoms, overflow prevention boards, and exterior walls. Of these, water tanks are suitable because they are exposed to light and algae can easily attach and grow thereon.

### Examples

Hereinafter, the present invention will be described in more detail with reference to Examples and Comparative Examples, but the present invention is not limited to the following Examples as long as it does not exceed the scope and spirit thereof. Examples 1 to 7, 13, and 14 are examples according to the present invention, and Examples 8 to 12 are comparative examples.

### [Evaluation method]

### (Amount of protein adsorption)

0.9 g of a mixed solvent obtained by mixing methoxypropanol and diacetone alcohol at 85:15 (mass ratio) and 0.6 g of a 0.1 wt% aqueous nitric acid solution were added to 0.5 g of a copolymer solution obtained in each Example with a solid content concentration of 20% by mass, and the resulting mixture was stirred at 50°C for 16 hours. Then, 1.33 g of a mixed solvent obtained by mixing methoxypropanol and diacetone alcohol at 85:15 (mass ratio) was added to obtain a coating solution A with a solid content concentration of 3% by mass.

2 mL of the coating solution A was added dropwise to a 20 mL glass vial, and the glass vial was rotated to spread the coating solution A over the inner surface of the vial to form a film. Subsequently, the glass vial was inverted and left to stand for 5 minutes, and was then subjected to a heat treatment in an oven at 150°C for 30 minutes to cure the film.

1 mL of a human fibrinogen (hFbn) solution adjusted to 1 mg/mL was added to each of the obtained film-attached glass vials, and after incubation at 4°C for 24 hours or at 37°C for 30 minutes, the glass vial was washed using a phosphate buffer solution (PBS) obtained by dissolving Tween 20 (manufactured by Sigma-Aldrich Co. LLC.) at 0.05% by mass.

Subsequently, 1 mL of a 0.1 N aqueous NaOH solution containing 5% by mass of sodium dodecyl sulfate (SDS) was added into the glass vial and incubated at 37°C for 2 hours to collect the proteins adsorbed to the film inside the glass vial in the aqueous phase.

Subsequently, 1 mL of a Micro BCA reagent (manufactured by Thermo Fisher Scientific Inc.) was added into the glass vial and incubated at 37°C for 2 hours to confirm sufficient color development.

180 µL of the solution in the glass vial was transferred to a 96-well TCPS plate, and the absorbance of light at 560 nm was measured using a microplate reader. Using a calibration curve created by the absorbance measurement with a protein solution of known concentration, the amount of protein (mg/mL) in the 0.1 N aqueous NaOH solution containing 5% by mass of sodium dodecyl sulfate (SDS) and the Micro BCA reagent was determined. The amount of protein determined corresponds to the amount of protein adsorbed. The lower the amount of protein determined, the better the non-adsorptivity for biological components and algae.

In the above evaluation, in those cases where no film residue could be visually confirmed, as a result of scraping a bottom portion of the glass vial with a metal spoon, after measurement and after discarding the liquid inside the glass vial and drying, it was deemed that the film had peeled off or dissolved during measurement to be evaluated as "unmeasurable."

### (Water resistance)

A glass slide was immersed in the above coating solution A, pulled out at a rate of 1 mm/sec, and subjected to a heat treatment in an oven at 150°C for 30 minutes to obtain a glass slide with a cured film.

The obtained glass slide with a cured film was immersed in physiological saline for one week. The retrieved substrate was dried in an oven at 40°C for 30 minutes, after which the presence or absence of film detachment was visually observed and evaluated in accordance with the following criteria. The water resistance is excellent if no film detachment is observed.

### <Evaluation criteria>

A: No film detachment was observed.
B: The film was partially detached.
C: The film was completely detached.

### [Explanation of abbreviations]

KBM503: 3-methacryloxypropyltrimethoxysilane (CH₂=C(CH₃)-C(=O)-O-(CH₂)₃-Si(OCH₃)₃, molecular weight: 248.4, "KBM-503" manufactured by Shin-Etsu Silicone Co., Ltd.).

HEAA: hydroxyethyl acrylamide (CH₂=C(CH₃)-C(=O)-NH-(CH₂)₂-OH, molecular weight: 115.13).

HEMA: hydroxyethyl methacrylate (CH₂=C(CH₃)-C(=O)-O-(CH₂)₂-OH, molecular weight: 130.14).

PEG9A: polyethylene glycol acrylate (number of repeating oxyethylene groups: 9) (CH₂=CH-COO-(CH₂CH₂O)₉-CH₃, molecular weight: 496.6).

AIBN: azo-based polymerization initiator without a polyoxyethylene chain (2,2'-azobis(isobutyronitrile), molecular weight: 164.21, manufactured by FUJIFILM Wako Pure Chemical Corporation).

VPE0201: azo-based polymerization initiator with a polyoxyethylene chain (a compound having a structure in which n5 is from 45 to 46 and n6 is from 6 to 14 in the above formula (PI), molecular weight: 2,240, "VPE-0201" manufactured by FUJIFILM Wako Pure Chemical Corporation).

### [Examples 1 to 14]

In a mixed solvent obtained by mixing methoxypropanol and diacetone alcohol at 85:15 (mass ratio), each component was dissolved in a ratio (mol%) shown in Table 1 so as to achieve a solid content concentration of 20% by mass. The obtained solution was placed in a pressure-resistant glass bottle, and following sealing, heated at 80°C for 24 hours for polymerization, thereby yielding a copolymer solution with a solid content concentration of 20% by mass.

The obtained copolymer solutions were evaluated as described above. The results are shown in Table 1.

**[Table 1]**

| Example | Ratio (mol%) | | | | | | Mw | Amount of protein adsorption (µg/mL) | | Water resistance |
|---|---|---|---|---|---|---|---|---|---|---|
| | (A) | (B) | (C) | Others | | | | | | |
| | KBM503 | HEAA | VPE0201 | AIBN | HEMA | PEG9A | | 4°C for 24 hours | 37°C for 30 minutes | |
| 1 | 0.1 | 97.9 | - | 2 | - | - | 110,000 | 3.1 | 1.3 | B |
| 2 | 1 | 97 | - | 2 | - | - | 100,000 | 1.9 | 0.5 | A |
| 3 | 5 | 93 | - | 2 | - | - | 82,000 | 2.9 | 0.7 | A |
| 4 | 5 | 69 | - | 2 | 24 | - | 43,000 | 1.9 | 0.6 | A |
| 5 | 5 | 49 | - | 2 | 44 | - | 38,000 | 1.4 | 0.6 | A |
| 6 | 5 | 93 | 2 | - | - | - | 98,000 | 1.6 | 0.5 | A |
| 7 | 15 | 83 | - | 2 | - | - | 68,000 | 3.9 | 1.4 | A |
| 8 | 0.01 | 97.99 | - | 2 | - | - | 110,000 | Unmeasurable | Unmeasurable | C |
| 9 | 29 | 69 | - | 2 | - | - | 82,000 | 7.9 | 3.9 | A |
| 10 | 5 | - | - | 2 | - | 93 | 44,000 | 5.2 | 1.9 | A |
| 11 | 5 | - | - | 2 | 93 | - | 89,000 | 6.9 | 4.1 | A |
| 12 | 5 | 29 | - | 2 | 64 | - | 32,000 | 4.3 | 2.2 | A |
| 13 | 25 | 35 | 2 | - | 38 | - | 76,000 | 2.9 | 1.5 | A |
| 14 | 5 | 68 | 2 | - | 25 | - | 72,000 | 1.6 | 0.7 | A |

The films formed from the copolymer solutions of Examples 1 to 7, 13, and 14 were excellent in non-adsorptivity for proteins and water resistance.

On the other hand, in Example 8 in which the ratio of the unit (A) was less than 0.05 mol% and the ratio of the unit (B) was more than 99.95 mol% with respect to all units in the copolymer, the amount of protein adsorption was "unmeasurable" and the water resistance was also evaluated as C.

In Example 9 in which the ratio of the unit (A) with respect to all units in the copolymer was more than 25 mol%, the non-adsorptivity for proteins was inferior, as compared to Examples 1 to 7, 13, and 14.

In Examples 10 and 11 which contained a unit based on PEG9A or HEMA, a (meth)acrylate with a biocompatible functional group, instead of the unit (B), the non-adsorptivity for proteins was inferior, as compared to Examples 1 to 7, 13, and 14.

In Example 12 in which the ratio of the unit (B) with respect to all units in the copolymer was less than 30 mol%, the non-adsorptivity for proteins was inferior, as compared to Examples 1 to 7, 13, and 14.

## Claims

1. A surface treatment agent comprising a copolymer having a unit (A) based on a polymerizable vinyl monomer having a reactive silyl group, and a unit (B) based on a (meth)acrylamide compound having a biocompatible functional group,
wherein a ratio of the unit (A) with respect to all units constituting the copolymer is from 0.05 to 25 mol%, and
a ratio of the unit (B) with respect to all units constituting the copolymer is from 30 to 99.95 mol%.

2. The surface treatment agent according to Claim 1, wherein a ratio of the unit (B) with respect to all units constituting the copolymer is from 44 to 99 mol%.

3. The surface treatment agent according to Claim 1 or 2, wherein a ratio of the unit (A) with respect to all units constituting the copolymer is from 1 to 10 mol%.

4. The surface treatment agent according to Claim 1 or 2, wherein the unit (B) is represented by formula (B-1) below: 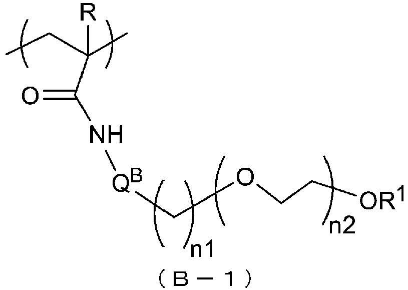 wherein R is a hydrogen atom or a methyl group, Q^{B} is a single bond or a divalent organic group, n1 is an integer from 1 to 4, n2 is an integer from 0 to 300, and R¹ is a hydrogen atom or an alkyl group.

5. The surface treatment agent according to Claim 1 or 2, wherein the unit (B) is represented by formula (B-1-1) below: 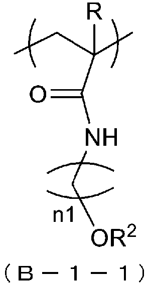 wherein R is a hydrogen atom or a methyl group, n1 is an integer from 1 to 4, and R² is a hydrogen atom, a methyl group, or an ethyl group.

6. The surface treatment agent according to Claim 1 or 2, wherein the unit (A) is represented by formula (A-1) below: 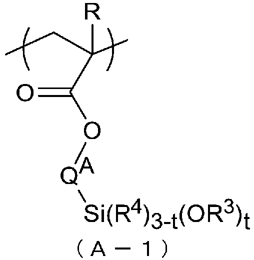 wherein R is a hydrogen atom or a methyl group, Q^{A} is a divalent organic group, R³ is a hydrogen atom or an alkyl group, R⁴ is an alkyl group, t is an integer from 1 to 3, and when a plurality of R³ groups or R⁴ groups are present, the plurality of R³ groups or R⁴ groups may be the same or different.

7. The surface treatment agent according to Claim 1 or 2, wherein the copolymer further comprises a unit (C) having a polyoxyethylene chain constituting a main chain thereof.

8. The surface treatment agent according to Claim 7, wherein the unit (C) is represented by formula (C-1) or (C-2) below: 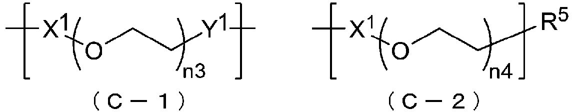
wherein each of n3 and n4 independently represents an integer from 10 to 200, each of X¹ and Y¹ independently represents a divalent group represented by formula (1) or (2) below, and R⁵ is a hydroxyl group, a methoxy group, or an ethoxy group, 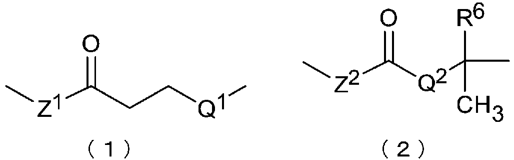
wherein Q¹ is a divalent organic group, Q² is a single bond or an alkylene group having 1 to 5 carbon atoms, and R⁶ is a cyano group or a methyl group,
when X¹ is a divalent group represented by the formula (1), Z¹ in the formula (1) is a single bond, and an end on the Z¹ side of the divalent group represented by the formula (1) is bonded to an end on the oxygen atom side of (OCH₂CH₂)ₙ₃ or (OCH₂CH₂)ₙ₄ adjacent to X¹,
when X¹ is a divalent group represented by the formula (2), Z² in the formula (2) is a single bond, and an end on the Z² side of the divalent group represented by the formula (2) is bonded to an end on the oxygen atom side of (OCH₂CH₂)ₙ₃ or (OCH₂CH₂)ₙ₄ adjacent to X¹,
when Y¹ is a divalent group represented by the formula (1), Z¹ in the formula (1) is an oxygen atom, and an end on the Z¹ side of the divalent group represented by the formula (1) is bonded to an end on the carbon atom side of (OCH₂CH₂)ₙ₃ adjacent to Y¹,
when Y¹ is a divalent group represented by the formula (2), Z² in the formula (2) is an oxygen atom, and an end on the Z² side of the divalent group represented by the formula (2) is bonded to an end on the carbon atom side of (OCH₂CH₂)ₙ₃ adjacent to Y¹.

9. An article comprising a substrate and a surface layer provided on the substrate,
wherein the surface layer is a layer formed from the surface treatment agent according to Claim 1 or 2.

10. The article according to Claim 9, which is a medical device.

11. The article according to Claim 9, which is a water tank.

12. A copolymer comprising a unit represented by formula (A-1) below, a unit represented by formula (B-1) below, and a unit (C) having a polyoxyethylene chain constituting a main chain of the copolymer,
wherein a ratio of the unit represented by the formula (A-1) with respect to all units constituting the copolymer is from 0.05 to 25 mol%, and
a ratio of the unit represented by the formula (B-1) with respect to all units constituting the copolymer is from 30 to 98 mol%, 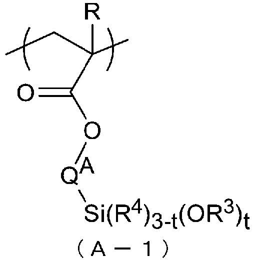
wherein R is a hydrogen atom or a methyl group, Q^{A} is a divalent organic group, R³ is a hydrogen atom or an alkyl group, R⁴ is an alkyl group, t is an integer from 1 to 3, and when a plurality of R³ groups or R⁴ groups are present, the plurality of R³ groups or R⁴ groups may be the same or different, 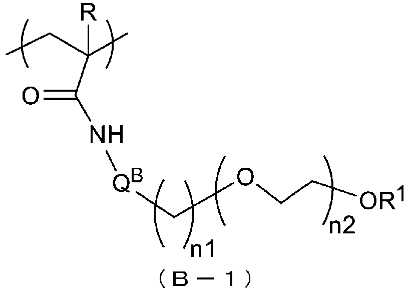
wherein R is a hydrogen atom or a methyl group, Q^{B} is a single bond or a divalent organic group, n1 is an integer from 1 to 4, n2 is an integer from 0 to 300, and R¹ is a hydrogen atom or an alkyl group.

13. The copolymer according to Claim 12, wherein the unit (B) is represented by formula (B-1-1) below: 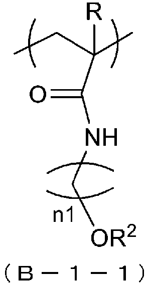 wherein R is a hydrogen atom or a methyl group, n1 is an integer from 1 to 4, and R² is a hydrogen atom, a methyl group, or an ethyl group.

14. The copolymer according to Claim 12 or 13, wherein the unit (C) is represented by formula (C-1) or (C-2) below: 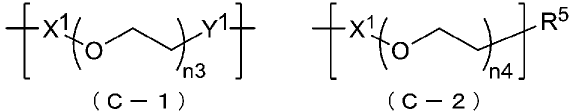
wherein each of n3 and n4 independently represents an integer from 10 to 200, each of X¹ and Y¹ independently represents a divalent group represented by formula (1) or (2) below, and R⁵ is a hydroxyl group, a methoxy group, or an ethoxy group, 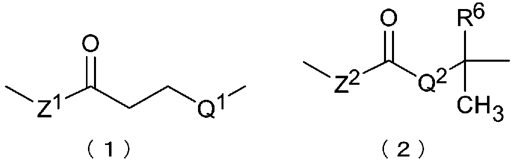
wherein Q¹ is a divalent organic group, Q² is a single bond or an alkylene group having 1 to 5 carbon atoms, and R⁶ is a cyano group or a methyl group,
when X¹ is a divalent group represented by the formula (1), Z¹ in the formula (1) is a single bond, and an end on the Z¹ side of the divalent group represented by the formula (1) is bonded to an end on the oxygen atom side of (OCH₂CH₂)ₙ₃ or (OCH₂CH₂)ₙ₄ adjacent to X¹,
when X¹ is a divalent group represented by the formula (2), Z² in the formula (2) is a single bond, and an end on the Z² side of the divalent group represented by the formula (2) is bonded to an end on the oxygen atom side of (OCH₂CH₂)ₙ₃ or (OCH₂CH₂)ₙ₄ adjacent to X¹,
when Y¹ is a divalent group represented by the formula (1), Z¹ in the formula (1) is an oxygen atom, and an end on the Z¹ side of the divalent group represented by the formula (1) is bonded to an end on the carbon atom side of (OCH₂CH₂)ₙ₃ adjacent to Y¹,
when Y¹ is a divalent group represented by the formula (2), Z² in the formula (2) is an oxygen atom, and an end on the Z² side of the divalent group represented by the formula (2) is bonded to an end on the carbon atom side of (OCH₂CH₂)ₙ₃ adjacent to Y¹.
